(19) Europäisches Patentamt
European Patent Office
Office européen des brevets

(11) Veröffentlichungsnummer: **0 296 493 A2**

(12) **EUROPÄISCHE PATENTANMELDUNG**

(21) Anmeldenummer: **88109639.0**

(22) Anmeldetag: **16.06.88**

(51) Int. Cl.⁴: **C08G 59/06 , C08G 59/17 , C08F 283/00 , C08L 63/10**

Patentansprüche für folgenden Vertragsstaat: ES.

(30) Priorität: **24.06.87 DE 3720851**

(43) Veröffentlichungstag der Anmeldung: **28.12.88 Patentblatt 88/52**

(84) Benannte Vertragsstaaten: **DE ES FR GB IT NL**

(71) Anmelder: **BASF Aktiengesellschaft**
**Carl-Bosch-Strasse 38**
**D-6700 Ludwigshafen(DE)**

(72) Erfinder: **Peter, Roland, Dr.**
**Wildermuthstrasse 33**
**D-6700 Ludwigshafen(DE)**
Erfinder: **Ebel, Klaus, Dr.**
**Asternstrasse 14**
**D-6704 Mutterstadt(DE)**
Erfinder: **Allspach, Thomas, Dr.**
**Seebacher Strasse 58 d**
**D-6702 Bad Duerkheim(DE)**

(54) **Epoxidharze.**

(57) Die Erfindung betrifft ein Epoxidharz aus einem Epoxyalkylhalogenid und einem aromatische Hydroxylgruppen enthaltenden Melaminderivat, sowie Vinylesterharze auf Basis eines Umsetzungsproduktes des Epoxidharzes mit einer ungesättigten Monocarbonsäure. Die Harze können zu Formstoffen mit erhöhter Wärmeformbeständigkeit ausgehärtet werden.

EP 0 296 493 A2

# Epoxidharze

Die Erfindung betrifft Epoxidharze auf Basis von Melaminderivaten, die zu Formstoffen mit erhöhter Wärmeformbeständigkeit und verbesserten Flammschutzeigenschaften ausgehärtet werden können, sowie daraus hergestellte Vinylesterharze, welche ähnliche vorteilhafte Eigenschaften aufweisen.

Epoxidharze werden üblicherweise durch Reaktion von Epoxyalkylhalogeniden mit mehrwertigen aromatischen Hydroxylverbindungen hergestellt. Durch Umsetzung mit ungesättigten Monocarbonsäuren lassen sich daraus die entsprechenden Vinylester herstellen. Formstoffe, die durch Härtung der üblichen Epoxid- bzw. Vinylesterharze hergestellt werden, weisen zwar eine befriedigende Zähigkeit und gute Chemikalienbeständigkeit auf; für manche Anwendungszwecke läßt jedoch ihre Wärmeformbeständigkeit zu wünschen übrig.

Der Erfindung lag daher die Aufgabe zugrunde, Epoxid- und Vinylesterharze bereitzustellen, die zu Formstoffen mit verbesserter Wärmeformbeständigkeit ausgehärtet werden können.

Diese Aufgabe wird erfindungsgemäß durch den Einbau eines aromatische Hydroxylgruppen enthaltenden Melaminderivats in das Epoxidharz gelöst.

Die erfindungsgemäßen Epoxidharze werden erhalten durch Umsetzung von Epoxyalkylhalogeniden, vorzugsweise von Epichlorhydrin mit einem aromatische Hydroxylgruppen enthaltenden Melaminderivat. Letzteres ist bevorzugt ein Reaktionsprodukt aus einem Cyanohalogenid und einem, ein oder zwei aromatische Ringe aufweisenden Amin, das in ortho-, meta- oder para-Stellung zur Aminogruppe mit mindestens einer Hydroxylgruppe substituiert ist. Geeignete Amine sind beispielsweise N-Methylamino-p-phenol, N-Methylamino-o-Kresol, N-Phenylamino-p-phenol, 1-(N-Methylamino)-5-hydroxynaphthalin, 1-(N-Methylamino)-4-hydroxynaphthalin.

Besonders bevorzugte Melaminderivate sind solche der allgemeinen Formel

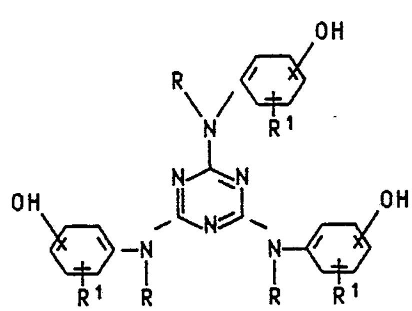

worin R Wasserstoff, eine Alkyl- oder eine Arylgruppe bedeutet, und $R^1$ für Wasserstoff, eine Alkyl-, Aryl- oder eine Aralkylgruppe oder für einen ankondensierten aromatischen Ring steht. Die Substituenten R und $R^1$ sollen vorzugsweise höchstens 12, insbesondere höchstens 6 Kohlenstoffatome aufweisen. Die Stellung der Hydroxylgruppe ist nicht festgelegt, bevorzugt sind allerdings Verbindungen, in denen die OH-Gruppe in para-Stellung zur Aminogruppe angeordnet ist.

Die Umsetzung des Epoxyalkylhalogenids mit dem Polyphenol kann sowohl in einem Schritt als auch zweistufig unter Isolierung der Chlorhydrinetherzwischenstufe erfolgen. Es werden die üblichen Epoxydierungskatalysatoren, wie Ammonium-, Phosphonium- oder Arsoniumsalze eingesetzt. Die Dehydrohalogenierung führt man in Gegenwart von Basen, wie z.B. Kaliumcarbonat, wäßriger Natron- oder Kalilauge durch. Das Hydroxylgruppen enthaltende Melaminderivat kann gegebenenfalls teilweise, vorzugsweise zu weniger als 40 Mol%, durch übliche Polyphenole, z.B. Bisphenol A, ersetzt sein.

Die erfindungsgemäßen Epoxidharze können direkt zur Herstellung von Formstoffen verwendet werden, beispielsweise von Formteilen, Faserverbundwerkstoffen, Beschichtungen und Klebstoffen. Dazu werden die Epoxidharze mit üblichen Härtern allein oder zusammen mit Härtungsbeschleunigern, in Mengen von 1 bis 150, vorzugsweise 3 bis 100 Gewichtsteilen, bezogen auf 100 Gewichtsteile Epoxidharz, versetzt und bei erhöhter Temperatur ausgehärtet. Geeignete Härter sind Polyamine, Polycarbonsäureanhydride und katalytische Härter, z.B. Hydrazide. Besonders bevorzugt sind Bis-(4-aminophenyl)methan, Bis-(4-aminophenyl)sulfon, Bis-(4-aminophenyl)keton und Dicyandiamid. Den Epoxidharzen können übliche Zusatzstoffe, wie Verstärkungsfasern aus Glas oder Kohlenstoff, Füllstoffe, Kunststoffe und pulverförmige Metalle zugemischt werden. Die bei der Härtung erhaltenen Formstoffe zeichnen sich durch gute Chemikalienbeständigkeit, eine hohe Wärmeformbeständigkeit und ausgezeichnete Flammwidrigkeit aus.

Die Epoxidharze können ferner zur Herstellung entsprechender Vinylester verwendet werden. Dazu werden sie mit ungesättigten Monocarbonsäuren umgesetzt. Bevorzugte Monocarbonsäuren sind Acrylsäure, Methacrylsäure sowie Halbester ungesättigter Dicarbonsäuren, z.B. von Maleinsäure. Die Umsetzung wird ohne Katalysatoren oder in Gegenwart von Lewisbasen, wie z.B. tertiären Aminen, Triarylphosphinen, Acetaten, Alkoholaten oder Ammoniumhalogeniden bei 60 bis 130 °C in einem inerten Lösungsmittel oder in der Schmelze durchgeführt. Dabei werden pro Epoxidgruppe vorzugsweise 0,6 bis 1,1 Äquivalente der ungesättigten Monocarbonsäure verwendet. Bei der Herstellung der Vinylester kann das erfindungsgemäße Epoxidharz teilweise, vorzugsweise zu weniger als 40 Mol%, durch übliche Epoxidharze, z.B. auf Basis von Bisphenol A oder von Novolaken, ersetzt werden.

Die Vinylesterharze enthalten

I. 25 bis 100 Gew.% der beschriebenen Vinylester,

II. 0 - 75 Gew.% eines ungesättigten, mit I copolymerisierbaren Monomeren, sowie

III.übliche Zusatzstoffe.

Als copolymerisierbare, ethylenisch ungesättigte monomere Verbindungen kommen die üblicherweise zum Herstellen ungesättigter Vinylesterharze verwendeten Allyl- und vorzugsweise Vinylverbindungen in Frage, z.B. Vinylaromaten, wie Styrol; substituierte Styrole, wie p-Chlorstyrol oder Vinyltoluol; Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide; Allylester, wie Diallylphthalat; ferner Vinylester wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente II. sind Styrol, $\alpha$-Methylstyrol, Chlorstyrol, Vinyltoluol, Divinylbenzol und Diallylphthalat.

Die erfindungsgemäß hergestellten Vinylesterharze können auch ohne Verdünnung mit einem ungesättigten Monomeren in Gegenwart von Polymerisationsinitiatoren ausgehärtet werden. Üblicherweise werden sie jedoch von 0 bis 75 Gew.%, vorzugsweise von 25 bis 75 Gew.% mit einer copolymerisierbaren, ethylenisch ungesättigten Verbindung verdünnt. Auch sind Lösungen der monomerenfreien Vinylester in nicht polymerisierbaren Lösungsmitteln für die Herstellung von Prepregs sowie für Beschichtungszwecke möglich.

Übliche Polymerisationsinitiatoren sind Peroxide oder andere in der Wärme Radikale bildende organische Verbindungen in Mengen von 0,05 bis 5 Gew.%, vorzugsweise von 0,1 bis 3 Gew.%, bezogen auf das Gesamtgewicht der Komponenten I + II. Als Radikale liefernde Initiatoren seien beispielhaft genannt: Benzoylperoxid, tert.-Butylperoctoat, tert.-Butylperbenzoat, Cyclohexanonperoxid, tert.-Dibutylperoxid und Hydroperoxide, ferner Azoverbindungen, wie Azodiisobutyronitril oder organische Verbindungen mit einer labilen Kohlenstoff-Kohlenstoff-Bindung.

Setzt man den peroxid-initiierten Formmassen übliche Polymerisationsbeschleuniger, wie z.B. Co-, Mn-, Sn- oder Ce-Salze organischer Säuren oder Amine, wie N,N-Dimethylanilin oder N,N-Diethylanilin zu, dann kann die Härtung auch ohne Temperaturerhöhung durchgeführt werden, wenn Hydroperoxide, bzw. Benzoylperoxid zum Einsatz kommen. Bei Verwendung üblicher Lichtinitiatoren, wie z.B. Benzoinether, Benzilketalen oder Acylphosphinoxidverbindungen kann die Härtung durch Bestrahlen mit Licht der Wellenlänge 200 bis 500 nm durchgeführt werden.

Als Inhibitoren kommen die üblichen in Frage wie z.B. Hydrochinon, 2,6-Dimethylhydrochinon, tert.-Butylbrenzkatechin, p-Benzochinon, Chloranil, 2,6-Dimethylchinon, Nitrobenzole, wie m-Dinitrobenzol, Thiodiphenylamin oder Salze von N-Nitroso-N-cyclohexylhydroxylamin sowie deren Gemische. Die Inhibitoren sind in den Formmassen im allgemeinen in einer Menge von 0,005 bis 0,2, vorzugsweise 0,01 bis 0,1 Gew.%, bezogen auf die Komponenten I + II, enthalten.

Als weiterhin gegebenenfalls mitzuverwendende inerte Lösungsmittel kommen Ketone, Ester, Kohlenwasserstoffe in Mengen bis zu 100 Gew.%, bezogen auf I + II, in Frage.

Als Gleitmittel kommen beispielsweise Zink-, Magnesium- und Calciumstearat sowie Polyalkylenetherwachse und Silikonverbindungen in Betracht.

Geeignete Füllstoffe sind z.B. übliche feinpulverige oder körnige anorganische Füllstoffe, wie Kreide, Kaolin, Quarzmehl, Dolomit, Schwerspat, Metallpulver, Zement, Talkum, Kieselgur, Holzmehl, Holzspäne, Pigmente und dergleichen. Als Verstärkungsfasern kommen solche aus Glas, Kohlenstoff oder aromatischem Polyamid in Frage. Sie werden in Mengen von 20 bis 200 Gew.%, bezogen auf I + II, eingesetzt.

Als Verdickungsmittel der mit Carbonsäureanhydriden modifizierten erfindungsgemäßen Vinylesterharze seien beispielsweise Erdalkalioxide oder -hydroxide, wie Calciumoxid, Calciumhydroxid, Magnesiumhydroxid und vorzugsweise Magnesiumoxid sowie Gemische dieser Oxide bzw. Hydroxide genannt. Diese können auch teilweise durch Zinkoxid ersetzt sein. Auch Polyisocyanate sind zur Eindickung geeignet. Die Verdickungsmittel können den Formmassen in Mengen von 0,5 bis 5 Gew.%, bezogen auf I + II, zugesetzt werden.

Die erfindungsgemäßen Vinylesterharze werden bevorzugt zu faserverstärkten Formteilen ausgehärtet, die sowohl eine hohe Temperaturbeständigkeit als auch hohe Zähigkeit aufweisen.

Beispiel

A) Herstellung des Hydroxyarylmelaminderivats

Zu einer Lösung von 550 g des -schwefelsauren Salzes von N-Methylamino-p-aminophenol in 1,3 l Wasser wurde bei Raumtemperatur 184 g Cyanurchlorid in 500 ml Dioxan zufließen lassen. Nach dem Einstellen des pH-Wertes auf 6 wurde zum Rückfluß erhitzt. Nach 1,5 h wurde abgekühlt und der ausgefallene Niederschlag abgesaugt. Der in Ethanol aufgenommene Rückstand wurde mit Wasser gefällt. Man erhielt nach dem Absaugen und Trocknen 420 g (95 % d.Th.) des Produktes als hellbraune Kristalle vom Schmelzpunkt 226°C.

B) Herstellung der Epoxidharze

400 g der in Abschnitt A synthetisierten Melaminverbindung wurden in 2150 g Epichlorhydrin gelöst und zu leichtem Rückfluß erwärmt. Anschließend wurden 217 g 50 %ige NaOH zudosiert. Das Azeotrop aus Epichlorhydrin und Wasser wurde kontinuierlich aus dem Reaktionsgefäß herausdestilliert, so daß die Wasserkonzentration bei etwa 1 % gehalten werden konnte. Nach einer Nachreaktionszeit von 30 Minuten wurde auf 80°C abgekühlt und mit 500 ml Wasser versetzt. Nach der Phasentrennung wurde die organische Schicht noch zweimal mit Wasser gewaschen und anschließend über einen Dünnschichtverdampfer vom überschüssigen Epichlorhydrin bei 160°C und 3 mbar befreit. Das braune, bei Raumtemperatur feste Harz weist ein Epoxidäquivalentgewicht von ca. 230 auf.

C) Herstellung der Vinylesterharze

230 g des epoxidierten Melaminderivats wurden mit 0,2 g Hydrochinonmonomethylether und 0,5 g Benzyltriethylammoniumchlorid versetzt und auf 100°C erwärmt. Unter Rühren wurden 86 g Methacrylsäure zudosiert und 6 Stunden reagiert. Dabei setzten sich ca. 95 % aller Epoxidgruppen um. Der entstandene Vinylester wurde bei 100°C in 210 g Styrol gelöst.

D) Herstellung der Prüfkörper

In die im Abschnitt C hergestellte Harzlösung wurde bei 23°C 2,0 % Methylethylketonperoxid und 1,0 % Cobaltnaphthenat (1 % in Styrol) eingerührt und in eine auf 4 mm Abstand fixierte Form aus zwei mit Trennmittel besprühte Metallplatten gegossen. Nach 2 Std. wurde entformt und nach 20 Std. 2 Std. lang bei 160°C nachgehärtet. Die Prüfplatten wurden auf mechanische Eigenschaften, Chemikalienbeständigkeit und Flammschutzeigenschaften geprüft.

Folgende Eigenschaften wurden gemessen:
Zug-E-Modul: 3700 $N/mm^2$
Zugfestigkeit: 64 $N/mm^2$
Dehnung: 4 %
Glastemperatur: 180°C

## Ansprüche

1. Epoxidharz aus
A. einem Epoxyalkylhalogenid und
B. einem aromatische Hydroxylgruppen enthaltenden Melaminderivat.

2. Epoxidharz nach Anspruch 1, dadurch gekennzeichnet, daß das Melaminderivat B die allgemeine Formel

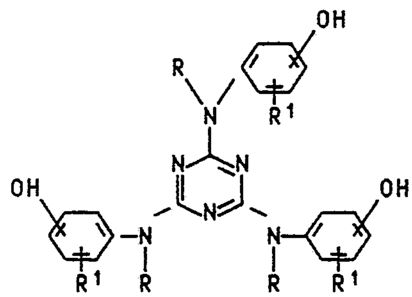

aufweist, wobei R Wasserstoff, eine Alkyl- oder eine Arylgruppe bedeutet, und $R^1$ für Wasserstoff, eine Alkyl-, Aryl- oder eine Aralkylgruppe oder für einen ankondensierten aromatischen Ring steht.

3. Verwendung des Epoxidharzes nach Anspruch 1, gegebenenfalls zusammen mit üblichen Härtern und anderen Zusatzstoffen, zur Herstellung von Formstoffen.

4. Verwendung des Epoxidharzes nach Anspruch 1 zur Herstellung von Vinylestern durch Umsetzung mit einer ungesättigten Monocarbonsäure.

5. Vinylesterharz, enthaltend
I. 25 bis 100 Gew.% eines Vinylesters, hergestellt durch Umsetzung von
a) dem Epoxidharz nach Anspruch 1 und
b) einer ungesättigten Monocarbonsäure,
II. 0 - 75 Gew.% eines ungesättigten, mit I copolymerisierbaren Monomeren, sowie
III. übliche Zusatzstoffe.

Patentanspruch für folgenden Vertragsstaat: SP

1. Verfahren zur Herstllung von Epoxidharzen, dadurch gekennzeichnet, daß man
A. ein Epoxyalkylhalogenid mit
B. einem aromatische Hydroxylgruppen enthaltenden Melaminderivat umsetzt.

2. Verfahren nach Anspruch 1, dadurch gekennzeichnet, daß das Melaminderivat B die allgemeine Formel

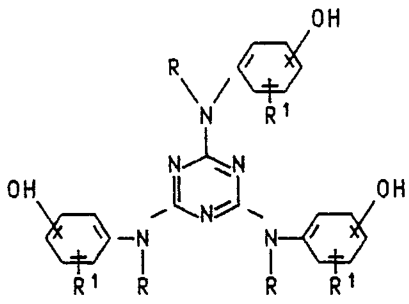

aufweist, wobei R Wasserstoff, eine Alkyl- oder eine Arylgruppe bedeutet, und $R^1$ für Wasserstoff, eine Alkyl-, Aryl- oder eine Aralkylgruppe oder für einen ankondensierten aromatischen Ring steht.

3. Verwendung des Epoxidharzes nach Anspruch 1, gegebenenfalls zusammen mit üblichen Härtern und anderen Zusatzstoffen, zur Herstellung von Formstoffen.

4. Verwendung des Epoxidharzes nach Anspruch 1 zur Herstellung von Vinylestern durch Umsetzung mit einer ungesättigten Monocarbonsäure.

5. Verfahren zur Herstllung von Vinylsterharzen, dadurch gekennzeichnet, daß man

I. 25 bis 100 Gew.% eines Vinylester, hergestellt durch Umsetzung von

a) dem Epoxidharz nach Anspruch 1 und

b) einer ungesättigten Monocarbonsäure,

II. 0 - 75 Gew.% eines ungesättigten, mit I copolymerisierbaren Monomeren, sowie

III. übliche Zusatzstoffe

vermischt.